# EUROPÄISCHE PATENTSCHRIFT

(11) **EP 1 124 886 B1**
(45) Veröffentlichungstag und Bekanntmachung des Hinweises auf die Patenterteilung: **12.06.2002**
(21) Anmeldenummer: 99950382.4
(22) Anmeldetag: 20.10.1999
(51) Int. Cl.: C08J 5/18, B29C 55/04, B29C 47/14

(54) **VERFAHREN ZUR HERSTELLUNG CELLULOSISCHER FLACHFOLIEN**
METHOD FOR PRODUCING CELLULOSIC FLAT FILMS
PROCEDE DE PRODUCTION DE FILMS CELLULOSIQUES PLATS

(30) Priorität: 22.10.1998 AT 177798
(43) Veröffentlichungstag der Anmeldung: 22.08.2001
(73) Patentinhaber: LENZING AKTIENGESELLSCHAFT, 4860 Lenzing (AT)
(72) Erfinder: GSPALTL, Peter, A-8071 Grambach (AT); SCHLOSSNIKL, Christian, A-4840 Vöcklabruck (AT)
(74) Vertreter: Schwarz, Albin, Dr.
(86) Internationale Anmeldenummer: AT9900252
(87) Internationale Veröffentlichungsnummer: WO0024812

(56) Entgegenhaltungen:
- EP-A- 0 574 870
- WO-A-97/24215
- WO-A-97/37392
- WO-A-98/49223
- DE-A- 4 421 482

## Beschreibung

Die vorliegende Erfindung betrifft ein Verfahren zur Herstellung cellulosischer Flachfolien gemäß dem Oberbegriff des Anspruches 1.

Zur Herstellung von cellulosischer Flachfolien nach dem sogenannten "Aminoxidverfahren", in welchem die Flachfolie aus einer Lösung der Cellulose in einem wässerigen tertiären Aminoxid hergestellt wird, sind bereits einige Vorschläge gemacht worden. Da als tertiäres Aminoxid bevorzugt N-Methylmorpholin-N-oxid ("NMMO") verwendet wird, wird im folgenden der Begriff "NMMO" stellvertretend für alle geeigneten tertiären Aminoxide verwendet.

So beschreibt die EP-A 0 574 870 unter anderem die Herstellung einer cellulosischen Folie durch die Extrusion einer Lösung der Cellulose in wässerigem NMMO durch eine Düse, welche einen Extrusionsspalt aufweist, dessen Breite im Bereich von 50 bis 200 µm liegt. In den Beispielen der EP-A 0 574 870 werden Celluloselösungen durch Düsen mit einer Spaltlänge von 4 cm und einer Spaltbreite von 50 µm, 100 µm, 150 µm, 200 µm und 300 µm extrudiert.

Die EP-A 0 574 870 betont dabei, daß im Formwerkzeug ein möglichst hohes Schergefälle erreicht werden soll, wodurch selbst bei geringen Verzügen der Formkörper im Luftspalt hohe Festigkeitseigenschaften erreicht werden sollen. Dies soll gemäß der EP-A 0 574 870 dadurch erreicht werden, daß der Durchmesser des Extrusionswerkzeuges (im Falle von Folien die Breite des Extrusionsspaltes) klein gehalten wird. Die EP-A 0 574 870 untersucht in diesem Zusammenhang allerdings nur die Festigkeiten der hergestellten Folien in Längsrichtung.

Aus der PCT-WO 97/37392 ist die Herstellung einer Flachfolie nach dem Aminoxidverfahren über eine Düse, deren Extrusionsspalt eine Länge von 1 m und eine Breite von 100 µm aufweist, bekannt.

Die bekanntgemachte österreichische Patentanmeldung A 705/97 beschreibt die Herstellung von cellulosischen Flachfolien nach dem Aminoxidverfahren durch Extrusion der Celluloselösung über eine Düse, deren Extrusionsspalt eine Länge von mindestens 40 cm aufweist. In den Beispielen der A 705/97 beträgt die Breite des Extrusionsspaltes jeweils 100 µm, 300 µm, 500 µm oder 1000 um.

In vielen Anwendungsgebieten von Flachfolien werden zusätzlich zu guten Festigkeiten in Längsrichtung auch hohe Festigkeiten quer zur Extrusionsrichtung gewünscht. Insbesondere bei der Herstellung von Flachfolien mit größeren Breiten, z.B. ab 30 cm, ist es jedoch schwierig, ausgewogene Eigenschaften in Längs- und Querrichtung zu erreichen. Besonders schwierig sind ausgewogene Eigenschaften bei der Herstellung von relativ dünnen Folien, z.B. Folien mit einer Dicke von weniger als 20 µm zu erreichen.

Die DE 195 15 137 beschreibt in diesem Zusammenhang, daß die in der EP-A 0 574 870 (bzw. in der dazu korrespondierenden DE 42 19 658) beschriebenen Flachfolien aufgrund des ausschließlichen Verzuges in Längsrichtung und der damit verbundenen Kristallinität verbesserungsbedürftige Gebrauchseigenschaften insbesondere in bezug auf die mechanischen Eigenschaften quer zur Extrusionsrichtung aufweisen. Als Lösungvorschlag beschreibt die DE 195 15 137 ein Verfahren, bei welchem zunächst nach dem bekannten Blasverfahren ein Celluloseschlauch hergestellt wird, welcher dann zu einer Flachfolie aufgeschnitten wird.

Eine weitere Möglichkeit zur Verbesserung der Festigkeit von Flachfolien in Querrichtung besteht darin, die folienartig ausgeformte Lösung im Luftspalt quer zur Extrusionsrichtung zu verstrecken. Ein solches Verfahren ist z.B. in der PCT-WO 97/24215 beschrieben, aber mit einem erheblichen Aufwand verbunden.

Die vorliegende Erfindung stellt sich zur Aufgabe, ein Verfahren zur Herstellung cellulosischer Flachfolien nach dem Aminoxidverfahren zur Verfügung zu stellen, mit welchem ohne den zusätzlichen Aufwand einer Verstreckung quer zur Extrusionsrichtung auch dünne Flachfolien mit ausgewogenen Festigkeitseigenschaften in Längs- und Querrichtung produziert werden können.

Die vorliegende Erfindung stellt sich weiters zur Aufgabe, eine lediglich monoaxial verstreckte cellulosische Flachfolie zur Verfügung zu stellen, welche auch bei einer größeren Folienbreite selbst bei geringen Dicken ein ausgewogenes Verhältnis zwischen den Festigkeitseigenschaften in Längs- und Querrichtung aufweist.

Die Aufgabe der Erfindung wird durch das erfindungsgemäße Verfahren gelöst, indem eine Extrusionsdüse eingesetzt wird, welche einen Extrusionsspalt mit einer Breite b aufweist, für die gilt 220 µm ≤ b ≤ 280 µm.

Überraschenderweise hat sich nämlich gezeigt, daß durch die richtige Wahl der Breite des Extrusionsspaltes bei gleichbleibender Festigkeit in Längsrichtung die Querfestigkeit der Flachfolie erheblich gesteigert werden kann.

Dabei ist es wichtig, die Breite des Extrusionsspaltes nicht zu gering zu halten, da bei kleinen Breiten des Extrusionsspaltes, wie sie z.B. in der EP-A 0 574 870 beschrieben sind, schlechte Quereigenschaften der Flachfolie resultieren.

So liegen z.B. die Querfestigkeiten von Flachfolien, die über eine Düse mit einem Extrusionsspalt der Breite b=150 µm extrudiert werden, auf sehr geringem Niveau. Die Querfestigkeiten von Flachfolien, die bei sonst vergleichbaren Bedingungen über eine Düse mit einem Extrusionsspalt der Breite b=220 µm extrudiert werden, liegen demgegenüber auf einem erheblich höherem Niveau.

Geht man mit der Breite des Extrusionsspaltes hingegen auf höhere Werte, z.B. auf 300 µm oder mehr, ist dieser Effekt weniger stark ausgeprägt. Als optimaler Bereich für die Breite des Extrusionsspaltes ergibt sich 220 µm ≤ b ≤ 280 µm, und bevorzugt 240 µm ≤ b ≤ 260 µm.

Bevorzugt weist der Extrusionsspalt eine Länge 1 auf, für die gilt 40 cm ≤ 1.

Die folienartig ausgeformte Lösung kann im Luftspalt in Extrusionsrichtung mit einer Geschwindigkeit abgezogen werden, die dem 0,2 bis 20fachen jener Geschwindigkeit entspricht, mit der die folienartig ausgeformte Lösung aus dem Extrusionsspalt austritt.

Bevorzugt beträgt die Länge in Extrusionsrichtung des letzten parallelen Abschnittes der Düse, bevor die Lösung aus der Düse austritt, mehr als 1 mm, insbesondere bevorzugt 5 mm bis 20 mm.

Die Aufgabe der Erfindung wird weiters durch eine monoaxial verstreckte cellulosische Flachfolie erhältlich nach dem Aminoxidverfahren gelöst, welche eine Dicke d von weniger als 20 µm, eine Breite B von mehr als 30 cm, und einen Faktor f von 65 oder weniger aufweist, wobei f definiert ist als f = d * (MD/TD), d in µm eingesetzt wird und wobei MD die Festigkeit der Folie in Längsrichtung (N/mm²) und TD die Festigkeit der Folie in Querrichtung (N/mm²) bedeuten.

Der Faktor f beträgt bei der erfindungsgemäßen Flachfolie bevorzugt 60 oder weniger.

Die erfindungsgemäßen Flachfolien zeigen somit, obwohl sie nicht in Querrichtung verstreckt sind, auch bei geringen Dicken ein sehr ausgewogenes Verhältnis zwischen den Festigkeiten in Längs- und Querrichtung. In Kombination mit der größeren Breite der erfindungsgemäßen Flachfolie ergibt sich somit eine für zahlreiche Anwendungen vorteilhafte cellulosische Flachfolie.

Das erfindungsgemäße Verfahren wird im folgenden durch Beispiele weiter erläutert. In allen Beispielen wiesen die hergestellten Flachfolien eine Breite von mehr als 30 cm auf.

### Beispiel 1 (Vergleichsbeispiel)

Eine Celluloselösung mit einer Temperatur von 100°C enthaltend 12,0 Masse% Cellulose, 77,0 Masse% NMMO und 11,0 Masse % Wasser wurde mittels einer Flachdüse, welche einen Extrusionsspalt von 40 cm Länge und einer Breite von 150 µm aufwies, mit einem Durchsatz von 37,8 kg/h durch einen Luftspalt von 20 mm in ein Fällbad bestehend aus 80 Masse% NMMO und 20 Masse% Wasser extrudiert.

Die als Flachfolie ausgeformte Celluloselösung trat aus der Düse mit einer Austrittsgeschwindigkeit von 8,3 m/min aus und wurde mit der gleichen Geschwindigkeit abgezogen. Dies bedeutet, daß die Folie in Längsrichtung nicht verstreckt wurde.

Die Folie wurde mit Glycerin behandelt und anschließend getrocknet. Die trockene Folie wies folgende Eigenschaften auf:

| | |
|---|---|
| Dicke (µm) | 48 |
| Festigkeit, längs (N/mm²) | 176 |
| Festigkeit, quer (N/mm²) | 45 |
| Faktor f | 188 |

### Beispiel 2 (Vergleichsbeispiel)

Es wurde wie in Beispiel 1 vorgegangen, nur wurde die Folie mit dem 2fachen der Austrittsgeschwindigkeit abgezogen. Die trockene Folie wies folgende Eigenschaften auf:

| | |
|---|---|
| Dicke (µm) | 22 |
| Festigkeit, längs (N/mm²) | 222 |
| Festigkeit, quer (N/mm²) | 31 |
| Faktor f | 158 |

### Beispiel 3 (Vergleichsbeispiel)

Es wurde wie in Beispiel 1 vorgegangen, nur wurde die Folie mit dem 3fachen der Austrittsgeschwindigkeit abgezogen. Die trockene Folie wies folgende Eigenschaften auf:

| | |
|---|---|
| Dicke (µm) | 18 |
| Festigkeit, längs (N/mm²) | 233 |
| Festigkeit, quer (N/mm²) | 30 |
| Faktor f | 140 |

### Beispiel 4 (Vergleichsbeispiel)

Es wurde wie in Beispiel 1 vorgegangen, nur wurde die Folie mit dem 5fachen der Austrittsgeschwindigkeit abgezogen. Die trockene Folie wies folgende Eigenschaften auf:

| | |
|---|---|
| Dicke (µm) | 10 |
| Festigkeit, längs (N/mm²) | 252 |
| Festigkeit, quer (N/mm²) | 23 |
| Faktor f | 110 |

### Beispiel 5 (Vergleichsbeispiel)

Es wurde wie in Beispiel 1 vorgegangen, nur wurde die Celluloselösung mit einem Durchsatz von 189 kg/h extrudiert. Die als Flachfolie ausgeformte Celluloselösung trat aus der Düse mit einer Austrittsgeschwindigkeit von 41,6 m/min aus und wurde mit der gleichen Geschwindigkeit abgezogen. Dies bedeutet, daß die Folie in Längsrichtung nicht verstreckt wurde. Die trockene Folie wies folgende Eigenschaften auf:

| | |
|---|---|
| Dicke (µm) | 50 |
| Festigkeit, längs (N/mm²) | 185 |
| Festigkeit, quer (N/mm²) | 41 |
| Faktor f | 226 |

Aus den Vergleichsbeispielen 1 bis 5 geht hervor, daß der Faktor f, welcher das Verhältnis zwischen Festigkeit in Längs- bzw. Querrichtung in Abhängigkeit von der Dicke d beschreibt, jeweils über 100 liegt.

### Beispiel 6

Es wurde wie in Beispiel 1 vorgegangen, nur hatte der Extrusionsspalt eine Breite von 220 µm.
Die als Flachfolie ausgeformte Celluloselösung trat aus der Düse mit einer Austrittsgeschwindigkeit von 5,7 m/min aus und wurde mit der gleichen Geschwindigkeit abgezogen. Dies bedeutet, daß die Folie in Längsrichtung nicht verstreckt wurde. Die trockene Folie wies folgende Eigenschaften auf:

| | |
|---|---|
| Dicke (µm) | 50 |
| Festigkeit, längs (N/mm²) | 167 |
| Festigkeit, quer (N/mm²) | 86 |
| Faktor f | 97 |

### Beispiel 7

Es wurde wie in Beispiel 6 vorgegangen, nur wurde die Folie mit dem 2fachen der Austrittsgeschwindigkeit abgezogen. Die trockene Folie wies folgende Eigenschaften auf:

| | |
|---|---|
| Dicke (µm) | 24 |
| Festigkeit, längs (N/mm²) | 210 |
| Festigkeit, quer (N/mm²) | 78 |
| Faktor f | 65 |

### Beispiel 8

Es wurde wie in Beispiel 6 vorgegangen, nur wurde die Folie mit dem 3fachen der Austrittsgeschwindigkeit abgezogen. Die trockene Folie wies folgende Eigenschaften auf:

| | |
|---|---|
| Dicke (µm) | 19 |
| Festigkeit, längs (N/mm²) | 223 |
| Festigkeit, quer (N/mm²) | 69 |
| Faktor f | 61 |

### Beispiel 9

Es wurde wie in Beispiel 6 vorgegangen, nur wurde die Folie mit dem 4fachen der Austrittsgeschwindigkeit abgezogen. Die trockene Folie wies folgende Eigenschaften auf:

| | |
|---|---|
| Dicke (µm) | 13 |
| Festigkeit, längs (N/mm²) | 232 |
| Festigkeit, quer (N/mm²) | 65 |
| Faktor f | 46 |

### Beispiel 10

Es wurde wie in Beispiel 6 vorgegangen, nur wurde die Folie mit dem 5fachen der Austrittsgeschwindigkeit abgezogen. Die trockene Folie wies folgende Eigenschaften auf:

| | |
|---|---|
| Dicke (µm) | 11 |
| Festigkeit, längs (N/mm²) | 243 |
| Festigkeit, quer (N/mm²) | 59 |
| Faktor f | 45 |

### Beispiel 11

Es wurde wie in Beispiel 6 vorgegangen, nur wurde die Celluloselösung mit einem Durchsatz von 189 kg/h extrudiert. Die als Flachfolie ausgeformte Celluloselösung trat aus der Düse mit einer Austrittsgeschwindigkeit von 28,4 m/min aus und wurde mit der gleichen Geschwindigkeit abgezogen. Dies bedeutet, daß die Folie in Längsrichtung nicht verstreckt wurde. Die trockene Folie wies folgende Eigenschaften auf:

| | |
|---|---|
| Dicke (µm) | 53 |
| Festigkeit, längs (N/mm²) | 174 |
| Festigkeit, quer (N/mm²) | 79 |
| Faktor f | 117 |

Aus dem Vergleich der Beispiele 6 bis 11 mit den Vergleichsbeispielen 1 bis 5 ergibt sich deutlich, daß bei ansonsten im wesentlichen gleichen Bedingungen die Querfestigkeiten der hergestellten Flachfolien im erfindungsgemäßen Verfahren auf deutlich höherem Niveau liegen. Weiters ist ersichtlich, daß der Faktor f bei Folien mit einer Dicke von weniger als 20 µm bei weniger als 65, insbesondere weniger als 60 liegt. Die Folien haben somit ein sehr ausgewogenes Verhältnis zwischen Festigkeit in Quer- und in Längsrichtung.

### Beispiel 12

Es wurde wie in Beispiel 1 vorgegangen, nur hatte der Extrusionsspalt eine Breite von 250 µm.
Die als Flachfolie ausgeformte Celluloselösung trat aus der Düse mit einer Austrittsgeschwindigkeit von 5,0 m/min aus und wurde mit der gleichen Geschwindigkeit abgezogen. Dies bedeutet, daß die Folie in Längsrichtung nicht verstreckt wurde. Die trockene Folie wies folgende Eigenschaften auf:

| | |
|---|---|
| Dicke (µm) | 64 |
| Festigkeit, längs (N/mm²) | 152 |
| Festigkeit, quer (N/mm²) | 92 |
| Faktor f | 106 |

### Beispiel 13

Es wurde wie in Beispiel 12 vorgegangen, nur wurde die Folie mit dem 2fachen der Austrittsgeschwindigkeit abgezogen. Die trockene Folie wies folgende Eigenschaften auf:

| | |
|---|---|
| Dicke (µm) | 36 |
| Festigkeit, längs (N/mm²) | 200 |
| Festigkeit, quer (N/mm²) | 81 |
| Faktor f | 89 |

### Beispiel 14

Es wurde wie in Beispiel 12 vorgegangen, nur wurde die Folie mit dem 3fachen der Austrittsgeschwindigkeit abgezogen. Die trockene Folie wies folgende Eigenschaften auf:

| | |
|---|---|
| Dicke (µm) | 24 |
| Festigkeit, längs (N/mm²) | 210 |
| Festigkeit, quer (N/mm²) | 74 |
| Faktor f | 68 |

### Beispiel 15

Es wurde wie in Beispiel 12 vorgegangen, nur wurde die Folie mit dem 5fachen der Austrittsgeschwindigkeit abgezogen. Die trockene Folie wies folgende Eigenschaften auf:

| | |
|---|---|
| Dicke (µm) | 16 |
| Festigkeit, längs (N/mm²) | 230 |
| Festigkeit, quer (N/mm²) | 64 |
| Faktor f | 58 |

### Beispiel 16

Es wurde wie in Beispiel 12 vorgegangen, nur wurde die Folie mit dem 7fachen der Austrittsgeschwindigkeit abgezogen. Die trockene Folie wies folgende Eigenschaften auf:

| | |
|---|---|
| Dicke (µm) | 12 |
| Festigkeit, längs (N/mm²) | 249 |
| Festigkeit, quer (N/mm²) | 55 |
| Faktor f | 54 |

### Beispiel 17

Es wurde wie in Beispiel 12 vorgegangen, nur wurde die Folie mit dem 9fachen der Austrittsgeschwindigkeit abgezogen. Die trockene Folie wies folgende Eigenschaften auf:

| | |
|---|---|
| Dicke (µm) | 9 |
| Festigkeit, längs (N/mm²) | 296 |
| Festigkeit, quer (N/mm²) | 41 |
| Faktor f | 65 |

### Beispiel 18

Es wurde wie in Beispiel 12 vorgegangen, nur wurde die Celluloselösung mit einem Durchsatz von 189 kg/h extrudiert. Die als Flachfolie ausgeformte Celluloselösung trat aus der Düse mit einer Austrittsgeschwindigkeit von 25,0 m/min aus und wurde mit der gleichen Geschwindigkeit abgezogen. Dies bedeutet, daß die Folie in Längsrichtung nicht verstreckt wurde. Die trockene Folie wies folgende Eigenschaften auf:

| | |
|---|---|
| Dicke (µm) | 67 |
| Festigkeit, längs (N/mm²) | 164 |
| Festigkeit, quer (N/mm²) | 87 |
| Faktor f | 126 |

### Beispiel 19

Es wurde wie in Beispiel 1 vorgegangen, nur hatte der Extrusionsspalt eine Breite von 300 µm.
Die als Flachfolie ausgeformte Celluloselösung trat aus der Düse mit einer Austrittsgeschwindigkeit von 4,2 m/min aus und wurde mit der gleichen Geschwindigkeit abgezogen. Dies bedeutet, daß die Folie in Längsrichtung nicht verstreckt wurde. Die trockene Folie wies folgende Eigenschaften auf:

| | |
|---|---|
| Dicke (µm) | 77 |
| Festigkeit, längs (N/mm²) | 137 |
| Festigkeit, quer (N/mm²) | 98. |
| Faktor f | 108 |

### Beispiel 20

Es wurde wie in Beispiel 19 vorgegangen, nur wurde die Folie mit dem 2fachen der Austrittsgeschwindigkeit abgezogen. Die trockene Folie wies folgende Eigenschaften auf:

| | |
|---|---|
| Dicke (µm) | 44 |
| Festigkeit, längs (N/mm²) | 187 |
| Festigkeit, quer (N/mm²) | 91 |
| Faktor f | 90 |

### Beispiel 21

Es wurde wie in Beispiel 19 vorgegangen, nur wurde die Folie mit dem 3fachen der Austrittsgeschwindigkeit abgezogen. Die trockene Folie wies folgende Eigenschaften auf:

| | |
|---|---|
| Dicke (µm) | 30 |
| Festigkeit, längs (N/mm²) | 204 |
| Festigkeit, quer (N/mm²) | 79 |
| Faktor f | 77 |

### Beispiel 22

Es wurde wie in Beispiel 19 vorgegangen, nur wurde die Folie mit dem 5fachen der Austrittsgeschwindigkeit abgezogen. Die trockene Folie wies folgende Eigenschaften auf:

| | |
|---|---|
| Dicke (µm) | 19 |
| Festigkeit, längs (N/mm²) | 219 |
| Festigkeit, quer (N/mm²) | 69 |
| Faktor f | 60 |

### Beispiel 23

Es wurde wie in Beispiel 19 vorgegangen, nur wurde die Folie mit dem 7fachen der Austrittsgeschwindigkeit abgezogen. Die trockene Folie wies folgende Eigenschaften auf:

| | |
|---|---|
| Dicke (µm) | 14 |
| Festigkeit, längs (N/mm²) | 225 |
| Festigkeit, quer (N/mm²) | 59 |
| Faktor f | 53 |

### Beispiel 24

Es wurde wie in Beispiel 19 vorgegangen, nur wurde die Folie mit dem 9fachen der Austrittsgeschwindigkeit abgezogen. Die trockene Folie wies folgende Eigenschaften auf:

| | |
|---|---|
| Dicke (µm) | 11 |
| Festigkeit, längs (N/mm²) | 257 |
| Festigkeit, quer (N/mm²) | 49 |
| Faktor f | 58 |

### Beispiel 25

Es wurde wie in Beispiel 19 vorgegangen, nur wurde die Celluloselösung mit einem Durchsatz von 189 kg/h extrudiert. Die als Flachfolie ausgeformte Celluloselösung trat aus der Düse mit einer Austrittsgeschwindigkeit von 20,8 m/min aus und wurde mit der gleichen Geschwindigkeit abgezogen. Dies bedeutet, daß die Folie in Längsrichtung nicht verstreckt wurde. Die trockene Folie wies folgende Eigenschaften auf:

| | |
|---|---|
| Dicke (µm) | 90 |
| Festigkeit, längs (N/mm²) | 155 |
| Festigkeit, quer (N/mm²) | 89 |
| Faktor f | 157 |

Aus den Beispielen 19 bis 25 ergibt sich, daß bei einem Düsenspalt von 300 µm die Festigkeitseigenschaften der hergestellten Folien gleich gut bzw. nur geringfügig besser sind als bei den Beispielen 12 bis 18.

## Patentansprüche

1. Verfahren zur Herstellung cellulosischer Flachfolien, wobei eine Lösung von Cellulose in einem wässerigen tertiären Aminoxid mittels einer Extrusiondüse, die einen Extrusionsspalt aufweist, extrudiert wird, wobei die Lösung folienartig ausgeformt wird, und die extrudierte Lösung über einen Luftspalt in ein Fällbad geführt wird, **dadurch gekennzeichnet, daß** eine Extrusionsdüse eingesetzt wird, welche einen Extrusionsspalt mit einer Breite b aufweist, für die gilt 220 µm ≤ b ≤ 280 um.

2. Verfahren gemäß Anspruch 1, **dadurch gekennzeichnet, daß** für die Breite b des Extrusionsspaltes gilt 240 µm ≤ b ≤ 260 µm.

3. Verfahren gemäß Anspruch 1 oder 2, **dadurch gekennzeichnet, daß** der Extrusionsspalt eine Länge 1 aufweist, für die gilt 40 cm ≤ 1.

4. Monoaxial verstreckte cellulosische Flachfolie erhältlich nach dem Aminoxidverfahren mit einer Dicke d von weniger als 20 µm, einer Breite B von mehr als 30 cm, und einem Faktor f von 65 oder weniger, wobei f definiert ist als f = d * (MD/TD), d in µm eingesetzt wird und wobei MD die Festigkeit der Folie in Längsrichtung (N/mm²) und TD die Festigkeit der Folie in Querrichtung (N/mm²) bedeutet.

## Claims

1. A method for producing cellulosic flat films, wherein a solution of cellulose in an aqueous tertiary amine oxide is extruded by means of an extrusion die exhibiting an extrusion slot, wherein the solution is formed in the manner of a film and the extruded solution is conducted via an air gap into a precipitation bath, **characterized in that** an extrusion die exhibiting an extrusion slot having a width b, to which 220 µm ≤ b ≤ 280 µm applies, is used.

2. A method according to claim 1, **characterized in that** 240 µm ≤ b ≤ 260 µm applies to width b of the extrusion slot.

3. A method according to claim 1 or 2, **characterized in that** the extrusion slot has a length 1, to which 40 cm ≤ 1 applies.

4. A monoaxially drawn cellulosic flat film, obtainable in accordance with the amine oxide process and having a thickness d of less than 20 µm, a width B of more than 30 cm, and a factor f of 65 or less, wherein f is defined as f=d*(MD/TD), the unit of d is µm and wherein MD denotes the tenacity of the film in longitudinal direction (N/mm²) and TD denotes the tenacity of the film in transverse direction (N/mm²).

## Revendications

1. Procédé pour fabriquer des feuilles cellulosiques planes, selon lequel on extrude une solution de cellulose dans un oxyde aminé tertiaire aqueux au moyen d'une buse d'extrusion, qui comporte une fente d'extrusion, la solution étant mise sous la forme d'une feuille, et la solution extrudée est guidée au moyen d'une fente d'air dans un bain de régénération, **caractérisé en ce qu'**on utilise une buse d'extrusion qui possède une fente d'extrusion ayant une largeur b, pour laquelle on a 220 µm ≤ b ≤ 280 µm.

2. Procédé selon la revendication 1, **caractérisé en ce que** pour la largeur b de la fente d'extrusion on a 240 µm ≤ b ≤ 260 µm.

3. Procédé selon la revendication 1 ou 2, **caractérisé en ce que** la fente d'extrusion possède une longueur 1, pour laquelle on a 40 cm ≤ 1.

4. Feuille cellulosique plane étirée monoaxialement, disponible selon un procédé d'amino-oxyde possédant une épaisseur inférieur à 20 µm, une largeur B supérieure à 30 cm et un facteur f égal à 65 ou moins, f étant défini par f = d * (MD/TD), d étant indiqué en mm et une largeur B supérieure à 30 cm et un facteur f égal à 65 ou moins, f étant défini par f = d * (MD/TD), d étant indiqué en µm, tandis que MD représente la résistance de la feuille dans la direction longitudinale (N/mm²) et TD la résistance de la feuille dans la direction transversale (N/mm²).
